# EUROPEAN PATENT SPECIFICATION

(11) **EP 1 308 054 B1**
(45) Date of publication and mention of the grant of the patent: **03.03.2004**
(21) Application number: 01959313.6
(22) Date of filing: 27.07.2001
(51) Int. Cl.: H04Q 3/00, H04Q 7/38

(54) **SERVICES IN A MOBILE TELECOMMUNICATIONS NETWORK**
DIENSTEN IN EINEM MOBILEN TELEKOMMUNIKATIONSNETZ
PROCEDES ET SYSTEMES ASSURANT DES SERVICES DE RESEAU DE TELECOMMUNICATIONS MOBILES DANS UN NOEUD D'ACHEMINEMENT DE RESEAU

(30) Priority: 27.07.2000 US 626590
(43) Date of publication of application: 07.05.2003
(73) Proprietor: Tekelec, Calabasas, CA 91302 (US)
(72) Inventor: TURGEON, Joseph, Leonard, Raleigh, NC 27615 (US); FENNELL, Chester, C., Jr., Apex, NC 27502 (US); SLATE, Larry, Gene, Apex, NC 27502 (US); BAGAASEN, Byron, C., Apex, NC 27502 (US); MARSICO, Peter, J., Carrboro, NC 27510 (US)
(74) Representative: Reinhard - Skuhra - Weise & Partner
(86) International application number: PCT/US2001/023833
(87) International publication number: WO 2002/011462

(56) References cited:
- WO-A-00/35153
- HAMDI M ET AL: "VOICE SERVICE INTERWORKING FOR PSTN AND IP NETWORKS" IEEE COMMUNICATIONS MAGAZINE, IEEE SERVICE CENTER. PISCATAWAY, N.J, US, vol. 37, no. 5, May 1999 (1999-05), pages 104-111, XP000830888 ISSN: 0163-6804

## Description

### Related Application Information

This application claims the benefit of United States Patent Application Number 09/626,590, filed July 27, 2000, the disclosure of which is incorporated herein by reference in its entirety.

### Technical Field

The present invention relates to call signaling services performed in a mobile telecommunications network, and more particularly to methods and systems for providing such services in a network routing element.

### Background Art

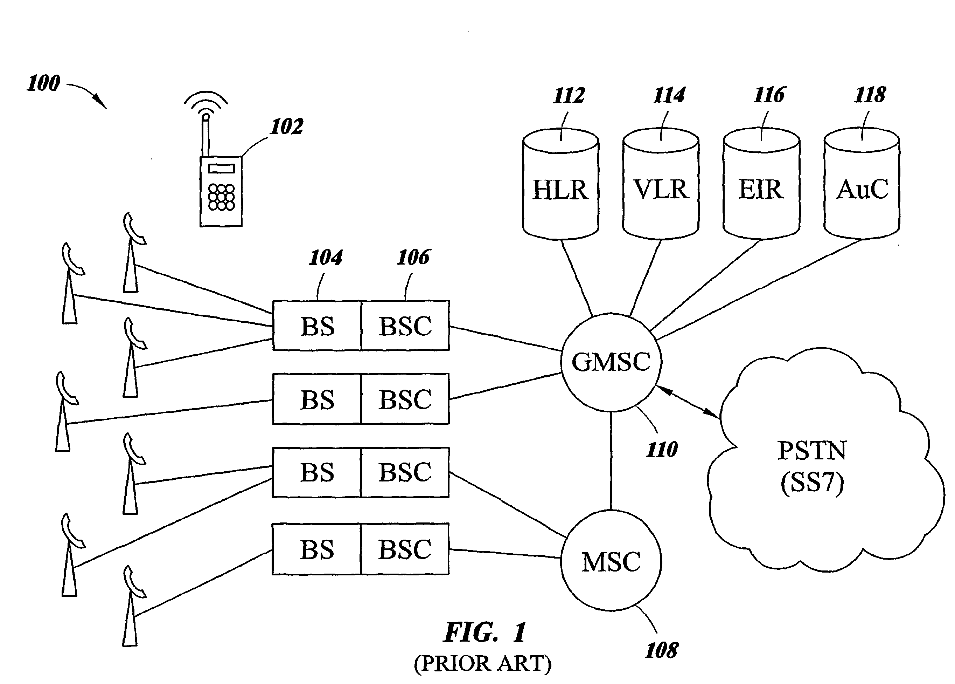

A typical wireless or cellular telecommunications network, generally indicated by the numeral 100, is illustrated in Fig. 1. Such networks typically employ a number of functional elements or entities including but not limited to; a telecommunication terminal or telephone handset 102, a base station (BS) **104** and associated base station controller (BSC) **106,** a mobile switching center (MSC) **108**, a gateway MSC (GMSC) **110**, a home location register (HLR) 112, a visitor location register (VLR) 114, an equipment identity register (EIR) **116,** and an authentication center (AuC) **118.** These network elements are communicatively coupled via a variety of communication link types, which in turn may employ a variety of communication protocols. An example of such a network element can be found in WO 0 035 153.

Of particular relevance to the integrated routing node of the present invention are the switching and database type network nodes, mentioned above, that facilitate much of the intelligent network services that are characteristic of modern wireless telecommunication networks. A brief discussion of each of their functions follows.

Mobile switching center (MSC) **108** is the functional entity that represents an automatic packet switching system within a wireless communication network. When such a packet switching system is implemented so as to serve as the interface for user traffic between the cellular network and other public switched networks, the corresponding node is often referred to as a Gateway MSC or GMSC. In general, MSC **108** provides basic switching functionality and coordinates the establishment of calls between wireless end users. The MSC is directly responsible for transmission facilities management, mobility management, and call processing functions. The MSC is typically in direct contact with both base stations (BSs) and with voice and signaling related network nodes. The MSC incorporates switching functions, mobile application functions, and other service logic functions.

Home location register (HLR) **112** is the functional entity that represents the primary database repository of subscriber information used to provide control and intelligence in wireless networks. The term register denotes control and processing center functions as well as the database functions. The HLR is managed by the wireless service provider and represents the "home" database for subscribers who have subscribed to service in a particular geographic area. The HLR contains a record for each "home" subscriber that includes location information, subscriber status, subscribed features, and directory numbers. Supplementary services or features that are provided to a subscriber are ultimately controlled by an HLR. An HLR incorporates database functions, mobile application functions, as well as other service logic functions, and may serve one or more MSCs.

Visitor location register (VLR) **114** is the functional entity that represents the local database, control, and processing functions that maintain temporary records associated with individual network subscribers. A VLR is managed by a wireless service provider and represents a temporary database of "visiting" subscribers that have roamed outside of their home service area. A "roaming" visitor can be a mobile subscriber being served by one of many systems serviced by their wireless service provider or network operator. A roaming visitor can also be a mobile subscriber who is roaming in a non-home, or visited, service area (i.e., a network operated by different service provider). A VLR contains subscriber location, status, and service information that is derived from a roaming subscriber's HLR. A local network MSC accesses a VLR to retrieve information for the handling of calls to and from visiting subscribers. A VLR incorporates database functions, mobile application functions, as well as other service logic functions and may serve one or more MSCs.

Equipment identity register (EIR) **116** is the functional entity that represents the database repository for mobile equipment related information. EIRs are typically used to store information related to electronic serial numbers (ESNs) associated with mobile terminals (e.g., handsets). Such an EIR database implementation could be used to prevent stolen or unauthorized mobile terminals from being activated and used within a wireless network fraudulently.

Authentication center (AuC) **118** is the functional entity that represents the authentication functions used to verify and validate a mobile subscriber's identity. The AuC manages and processes authentication information related to a particular mobile subscriber. Typically, this information consists of encryption and authentication keys as well as complex mathematical algorithms used to prevent fraudulent or unauthorized use of the wireless network. An AuC incorporates database functions used for the authentication keys and authentication algorithm functions.

As indicated in Fig. 1, the above described wireless network elements function together in concert to provide the intelligent network services typically associated with modern wireless telecommunication networks. As such, inter-communication between these network elements is a very important issue, and is facilitated at least in part by signaling communication links. In Europe, the signaling protocols for mobile communications are defined in the Global System for Mobile Communications (GSM) standards. Both IS-41 and GSM standards include a mobile application part (MAP) protocol component for performing mobile call signaling functions. Accordingly, as used herein, the term "MAP message" is intended to refer to both IS-41 and GSM MAP messages.

Signaling in a wireless or cellular network is employed to implement a number of call processing operations. The term call processing encompasses a wide variety of functions that establish, maintain, and tear down calls to and from mobile subscribers (where a call is defined as a temporary communication between end users for the purpose of exchanging information). Mobile calls include a sequence of events that allocate and assign the resources and signaling channels required to establish a communication connection, with the first event in the sequence typically being call establishment. In general terms, the act of call establishment or call setup in a wireless communications network includes a set of functions that arrange for the connection of cellular calls.

With particular regard to wireless calls, the nature of use dictates that there are essentially two types of calls, mobile-originated and mobile-terminated calls. Mobile-originated calls are those that are placed or originate from a mobile station, while mobile-terminated calls are defined as those calls that are made to a mobile station. Mobile-originated calls are established from a mobile subscriber (MS) (i.e., the calling party) to a telecommunications termination point (i.e., the called party) that can be located in either a wired or wireless telecommunications network. Mobile-terminated calls are established from either a wired or wireless "calling party" telecommunications terminal to a "called party" mobile subscriber.

In addition to providing the infrastructure for basic call setup and teardown operations as mentioned above, wireless signaling is also responsible for providing general mobility management services. Such services enable the communications network to maintain location and mobile subscriber status information so that end users can make and receive such mobile-originated and mobile-terminated calls while moving or roaming from place to place. It should be noted that a mobile-to-mobile call is usually treated as the combination of a mobile-originated call scenario and a mobile-terminated call scenario.

Both mobile-originated and mobile-terminated calls typically make use of the extensive infrastructure and routing facilities that exist within the public switched telephone network (PSTN) to create the connections between the calling and called parties. However, call signaling / connection through direct trunking between mobile switching centers (MSCs) that are in close proximity is sometimes employed for mobile-to-mobile calls. Such local mesh networking architectures are typically used in high traffic areas where there are many mobile subscribers and many mobile-to-mobile calls.

The establishment of a cellular call may involve both IS-41 and traditional Signaling System 7 (SS7) ISDN User Part (ISUP) call control signaling to properly connect the call between parties. IS-41 call processing signaling is used to obtain the location, status, routing, and any special call treatment information about a mobile subscriber to properly complete mobile-terminated calls. It is also used to obtain call treatment and routing information for mobile-originated calls. This signaling is provided by the IS-41 intersystem operations. With regard to intersystem handoff, IS-41 signaling is also used to control the inter-MSC trunks. A more detailed discussion of IS-41 signaling can be found in *Mobile Telecommunications Networking With IS-41* by Michael D. Gallagher and Randall A. Snyder, McGraw-Hill Publishing 1997. Traditional call control signaling is used to establish trunks and propagate the call, as well as information about the call, from the calling party to the called party. Call control signaling is generally provided by the out-of-band SS7 ISUP protocol, but can be provided via an in-band multifrequency (MF) type signaling protocol. Depending upon the particular network implementation and service required, signaling can be provided by GSM, IS-41, SS7 ISUP or combination of thereof.

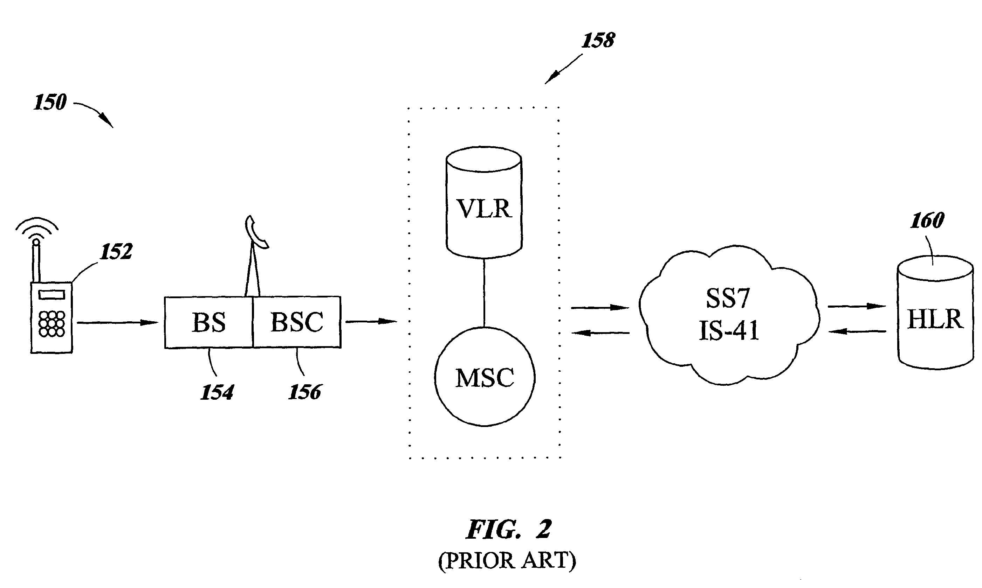

Shown in Fig. 2 is an example of a typical wireless signaling progression associated with registration of a mobile station or handset in a wireless communication network **150.** In wireless telecommunication networks, mobile station registration is the process by which a mobile subscriber (MS) is identified to the network and consequently indicates their location and status to the responsible network functional entities. More specifically, the network entities primarily responsible for maintaining MS location and status information are the VLR and HLR. As indicated in Fig. 2, in many cases, VLR functionality is incorporated directly within an MSC switching node.

With regard to the signaling message flows during the process of MS registration shown in Figure 2, a mobile subscriber handset **152** sends a signal, requesting a call setup, to a local base station **154**. The base station unit **154**, with the assistance of base station controller **156**, signals the combined MSCNLR entity **158**, thereby conveying the call request. The combined MSC/VLR **158** then formulates an IS-41 signaling message (e.g., a LocationRequest Invoke message), which is intended to obtain information about the location of the called party, and transmits this message to the called party mobile subscriber's HLR **160.** HLR 160 receives the information request message and subsequently responds to MSC/VLR **158** with a new message (e.g., a LocationRequest Return Result message) which contains at least a portion of the information necessary to complete the requested call.

It should be appreciated the example shown in Fig. 2 is only one of the many signaling related communication operations that are required to facilitate the broad range of functions and user services provided by modern wireless telecommunication networks.

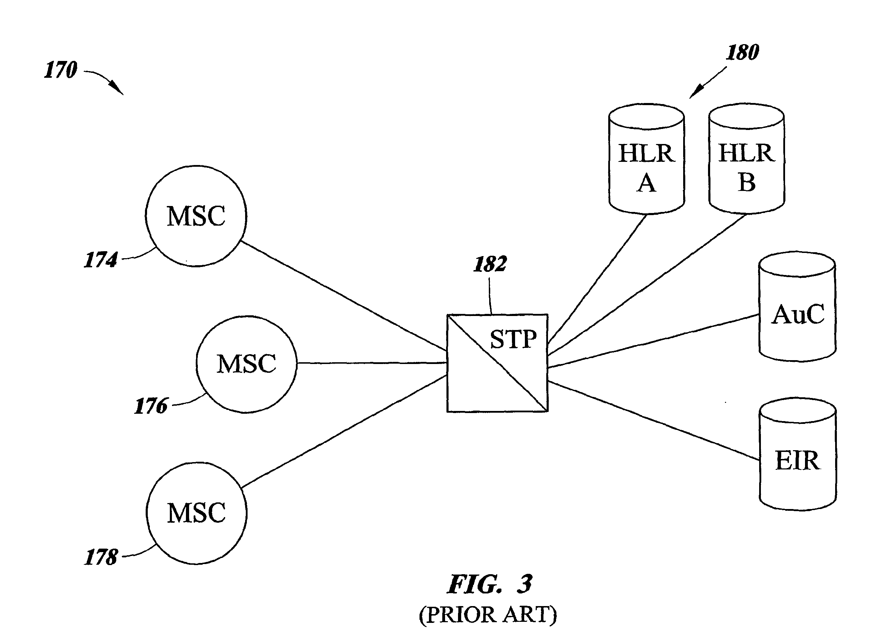

Shown in Fig. 3 is a simplified wireless network 170 that includes a first MSC node **174,** a second MSC node **176,** a third MSC node **178,** and a plurality of wireless service related nodes (e.g., HLR, EIR, AuC). More particularly, network **170** includes a mated pair of HLR nodes, generally indicated by the numeral **180**. The MSC and wireless service nodes are typically interconnected via an intermediate SS7 network using an IS-41 communication protocol. It will be appreciated that in the network architecture shown, each of the MSC nodes **174, 176, 178** is connected to the mobile service nodes via a Signal Transfer Point (STP) **182**.

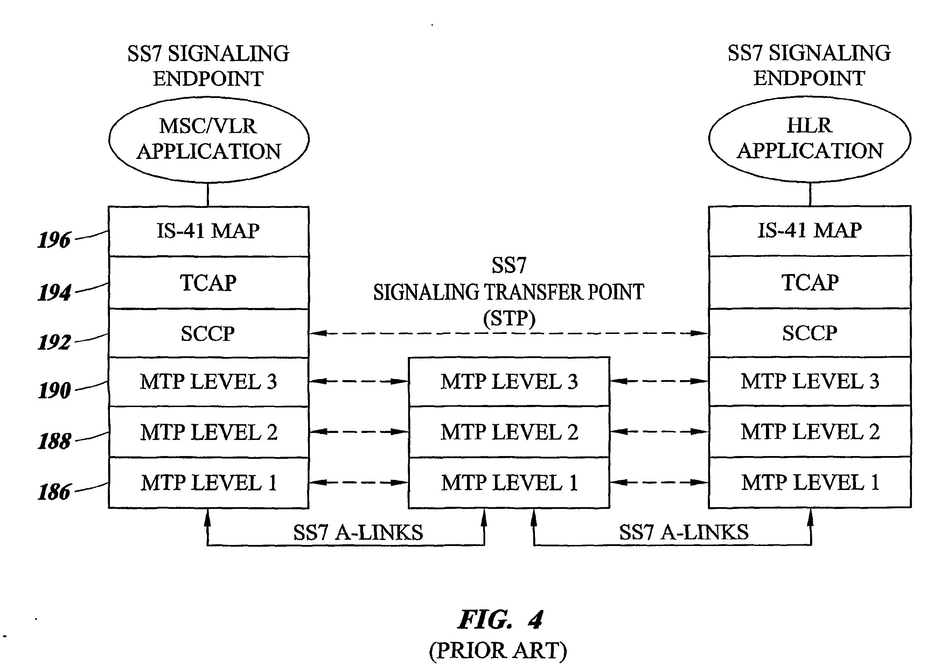

Referring to Figure 4, with regard to the communication of signaling messages between a MSC and an mobile service node, it will be appreciated that an IS-41 mobile signaling message sent from an MSC to a mobile service node typically includes a Message Transport Part (MTP) level 1 component **186**, an MTP level 2 component **188**, an MTP level 3 component **190**, a Signaling Connection Control Part (SCCP) component **192**, a Transaction Capabilities Application Part (TCAP) component **194**, and an IS-41 Mobile Application Part (MAP) component **196,** as generally indicated in Figure 4. It will be appreciated from the diagram presented in Figure 4 that an STP deployed in a mobile communications network typically uses only information contained in MTP levels **186** through **190** of a mobile services signaling message to perform the routing necessary to deliver the signaling message to a target destination. In some cases, where global title translation type routing is required, an STP may utilize information contained in the SCCP portion **192** of the signaling packet to make a routing decision. In any event, utilization or processing of signaling message information content above the SCCP layer **192** does not occur at the STP.

Such network implementations involving the use of signal transfer points are commonly deployed for a variety of reasons. One major reason involves the significant cost savings associated with running a single dedicated SS7 link from each MSC to one STP node, as opposed to requiring a dedicated SS7 link from each MSC to every other MSC and to every mobile service node (i.e., mesh configuration). Those skilled in the art of telecommunication networks will appreciate that this concept is fundamental to the nature and purpose of the SS7 network, and consequently the motivation and merit of such SS7 network connectivity will not be discussed in detail herein. In general, within the context of the network configurations described above, wireless network operators have discovered that fewer and shorter distance communication links tend to be less expensive to deploy and subsequently maintain.

It will also be appreciated by those skilled in the art of wireless telecommunication networking that as the volume of mobile subscribers increases and the range of services offered to these subscribers increases, the transaction rate capacity of the wireless network database services entities described above will also be required to increase correspondingly.

Therefore, what is needed is a system and method of deploying a wireless telecommunication network database services entities such as an HLR, VLR, EIR, or AuC, that is easily scaleable, provides high message processing transaction rates, and minimizes communication link requirements.

### Disclosure of the Invention

According to one aspect, the present invention includes a communications network element that is capable of providing the message routing functionality of a Signal Transfer Point (STP) as well as the functionality typically provided by wireless service nodes. Such wireless or mobile service nodes include, but are not limited to, a Home Location Register, a Visitor Location Register (VLR), an Authentication Center (AuC), an Equipment Identity Register (EIR), a World Wide Web (WWW) translation server, and a Short Message Service (SMS) center. The mobile services routing node includes a communication module capable of transmitting and receiving data packets over a network. A discrimination process receives incoming data packets and subsequently directs certain packets to a mobile services database manager. The mobile services database manager facilitates access to an appropriately provisioned mobile service database process based on information contained within the data packets. Signaling message packets received by the mobile services routing node may result in the updating or modification of data contained within one or more of the mobile service database processes. Furthermore, mobile service database process may generate new messages, in response to the receipt of certain mobile service related signaling messages.

Accordingly, it is an object of the present invention to provide an STP-like routing node that is capable of performing the mobile service functions typically associated with a Home Location Register (HLR) node.

It is another object of the present invention to provide an STP-like routing node that is capable of performing the mobile service functions typically associated with a Visitor Location Register (VLR) node.

It is another object of the present invention to provide an STP-like routing node that is capable of performing the mobile service functions typically associated with an Equipment Identity Register (EIR) node.

It is another object of the present invention to provide an STP-like routing node that is capable of performing the mobile service functions typically associated with an Authentication Center (AuC) node.

It is another object of the present invention to provide an STP-like routing node that is capable of performing the mobile service functions typically associated with a Short Message Service (SMS) node.

It is another object of the present invention to provide an STP-like routing node that is capable of performing the mobile service functions typically associated with a World Wide Web (WWW) user ID / Mobile Identification Number (MIN) translation service node.

Some of the objects of the invention having been stated hereinabove, other objects will become evident as the description proceeds, when taken in connection with the accompanying drawings as best described hereinbelow.

### Brief Description of the Drawings

A description of preferred embodiment of the present invention will now proceed with reference to the accompanying drawings, of which:
Figure 1 is a diagram illustrating a prior art mobile telecommunications network architecture and associated network elements;
Figure 2 is a diagram of a prior art mobile telecommunications network illustrating a typical mobile subscriber location update interaction;
Figure 3 is a diagram of a prior art mobile telecommunications network that includes a Signal Transfer Point (STP) routing node;
Figure 4 is a block diagram of signaling protocol usage in a prior art mobile telecommunications network that includes an STP routing node;
Figure 5 is a diagram of an implementation of a mobile services routing node (MSRN) in a mobile telecommunications network according to an embodiment of the present invention;
Figure 6 is a schematic diagram of the internal architecture of one embodiment of a mobile services routing node of the present invention;
Figure 7 is a schematic and message flow diagram associated with one embodiment of a mobile services routing node of the present invention;
Figure 8 is a table that illustrates sample mobile services database structures used in one embodiment of a mobile services routing node of the present invention; and
Figure 9 is a flow diagram illustrating the processing of mobile service related signaling messages in a mobile services routing node of the present invention.

### Detailed Description of the Invention

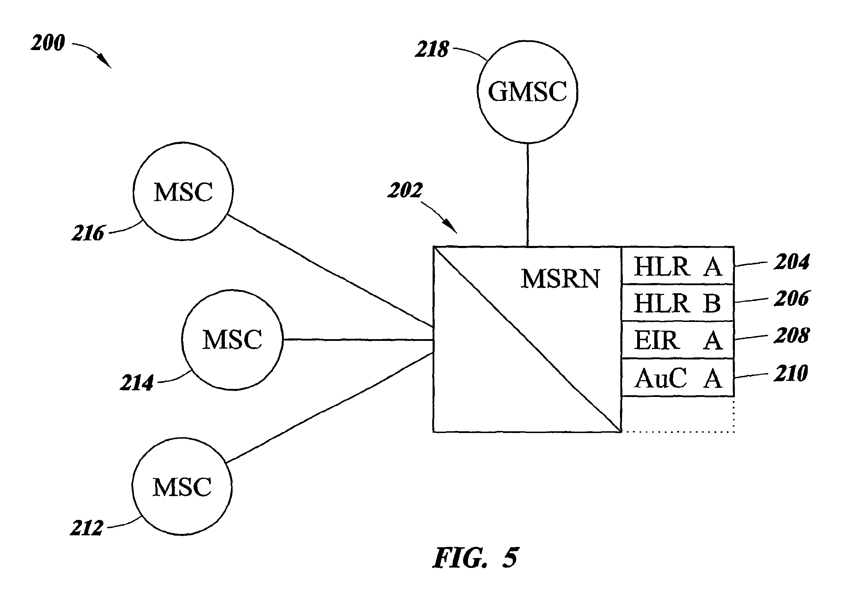

Shown in Figure 5 is a mobile communications network, generally indicated by the numeral **200,** that includes a mobile services routing node (MSRN) **202** of the present invention. Mobile communication network 200 also includes a first mobile switching center (MSC) node **212**, a second MSC node **214**, a third MSC node **216**, as well as a Gateway MSC (GMSC) node **218**. Each of the MSC nodes and the GMSC node are connected to MSRN **202** via one or more signaling communication links. It will be appreciated that such signaling communication links could be configured to support Signaling System 7 (SS7) / Message Transport Part (MTP), Internet Protocol (IP), Asynchronous Transfer Mode (ATM), or functionally similar communication protocols.

As further indicated in Figure 5, MSRN **202** includes a plurality of mobile service processes that are integral with and generally contained within the node. More particularly, MSRN **202** includes a first Home Location Register (HLR) process **204**, a second HLR process **206**, an Equipment Identity Register (EIR) process **208,** and an Authentication Center (AuC) process **210.** As such, MSRN **202** is adapted not only to receive and route mobile call setup / teardown related signaling messages, but also to receive, process, and respond to certain mobile service related signaling messages.

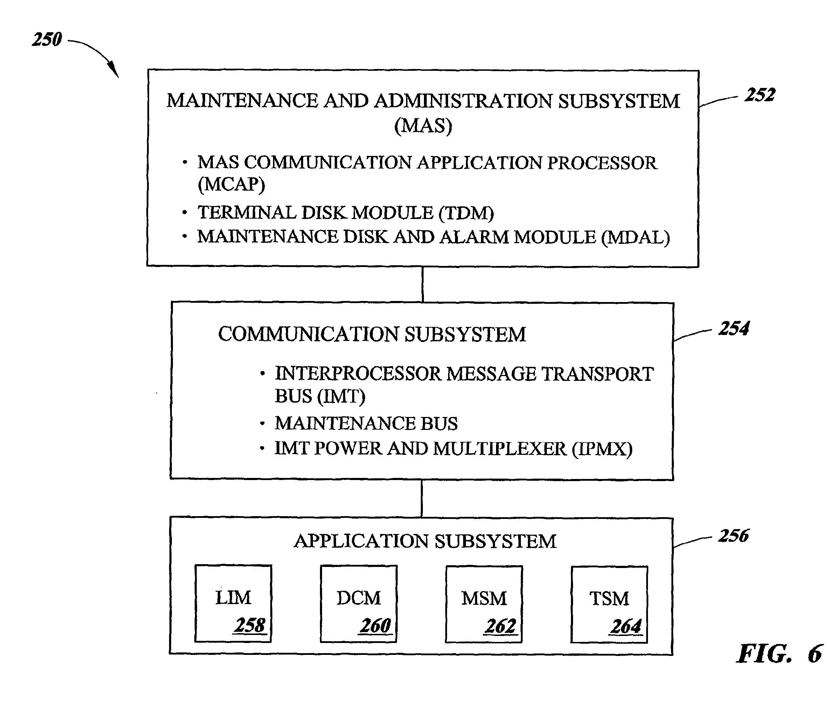

Shown in Figure 6 is a block diagram of one embodiment of a mobile services routing node (MSRN) **250** of the present invention. In the preferred embodiment shown, mobile services routing node **250** employs an internal architecture similar to that of high performance STP and signaling gateway (SG) products which are marketed by the assignee of the present application as the Eagle® STP and IP7 Secure Gateway^{tm}, respectively available from Tekelec, Inc. of Calabasas, California. A detailed description of the Eagle® STP may be found in the *Eagle® Feature Guide* PN/910-1225-01, Rev. B, January 1998, published by Tekelec, the disclosure of which is hereby incorporated herein by reference. Similarly, a detailed description of the IP⁷ Secure Gateway^{tm} may be found in Tekelec publication PN/909-0767-01, Rev B, August 1999, titled *Feature Notice IP*^{*7*} *Secure Gateway*^{tm} *Release 1*.*0*, the disclosure of which is hereby incorporated by reference. As described in the above referenced *Eagle® Feature Guide*, an Eagle® STP **250** includes the following subsystems: a Maintenance and Administration Subsystem (MAS) **252**, a communication subsystem **254** and an application subsystem **256**. The MAS **252** provides maintenance communications, initial program load, peripheral services, alarm processing and system disks. The communication subsystem **254** includes an Interprocessor Message Transport (IMT) bus that is the main communication bus among all subsystems in the Eagle® STP **250.** This high-speed communications system functions as two 125 Mbps counter-rotating serial buses.

The application subsystem **256** includes application cards that are capable of communicating with the other cards through the IMT buses. Numerous types of application cards can be incorporated into STP **250**, including: a Link Interface Module (LIM) **258** that provides SS7 links and X.25 links, a Data Communication Module (DCM) **260** that provides a TCP/IP interface over Ethernet, and a Translation Service Module (TSM) **264** may also be provided to support triggered local number portability service. Once again, a detailed description of the Eagle® STP is provided in the above cited *Eagle® Feature Guide* and need not be described in detail herein. It should also be appreciated that, in addition to conventional SS7 LIM cards, the Data Communication Module (DCM) **260** can be employed in a similar manner to provide for the transport of Internet Protocol (IP) encapsulated SS7 messages over an IP network, as described in the above referenced *Feature Notice IP*^{*7*} *Secure Gateway*^{tm} *Release 1.0* publication. A detailed description of the functionality of DCM **260** is described in PCT Publication Nos. WO 00/35155 and WO 00/35156 and in commonly-assigned copending U.S. Patent Application No. 09/588,852, the disclosures of which are incorporated herein by reference in their entirety. With particular regard to the TSM triggered LNP services module mentioned above, a detailed description of the Tekelec triggered LNP solution may be found in the *Feature Guide LNP MSMS* PN/910-1598-01, Rev. A, January 1998, published by Tekelec, the disclosure of which is hereby incorporated herein by reference.

Also shown in Figure 6, and generally connected to the internal communication subsystem **254** is a Mobile Services Module (MSM) **262**. MSM **262** is a novel feature of the present invention that is not described in any of the above-referenced publications. MSM **262** is adapted to maintain and support one or more mobile service database processes. Such processes may include, but are not limited to: a Home Location Register (HLR) process, a Visitor Location Register (VLR) process, an Equipment Identity Register (EIR) process, an Authentication Center (AuC) process, a Short Message Service (SMS) process, and a mobile subscriber ID-to-World Wide Web (WWW) user ID translation process. In the mobile subscriber ID-to-WWW user ID translation process, a mobile subscriber ID is in the form of a Mobile Subscriber Integrated Services Digital Network (MSISDN) or international Mobile Subscriber Identifier (IMSI) number and a World Wide Web user ID is in the form of a Uniform Resource Locator (URL) or an email address. A more detailed discussion of mobile services module function, operation, and implementation is provided below.

### Mobile Services Routing Node (MSRN) Architecture

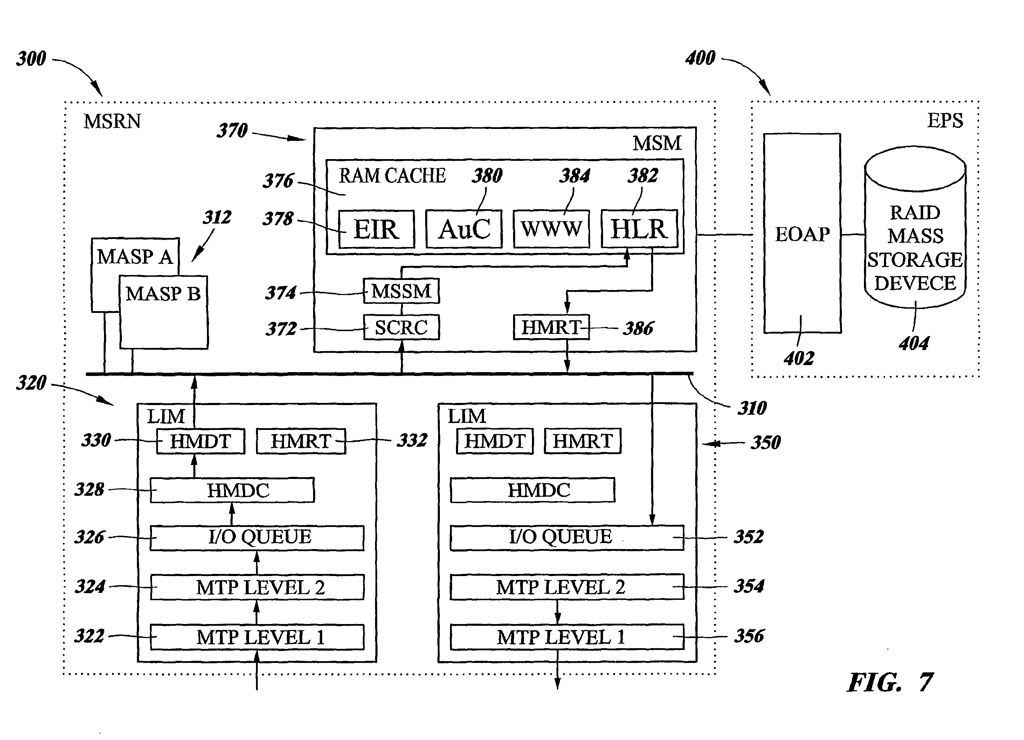

Shown in Figure 7 is a schematic diagram of a mobile services routing node (MSRN) of the present invention, which is generally indicated by the numeral **300.** MSRN **300** includes a high speed Interprocessor Message Transport (IMT) communications bus **310.** Communicatively coupled to IMT bus **310** are a number of distributed processing modules or cards including: a pair of Maintenance and Administration Subsystem Processors (MASPs) **312,** a pair of SS7 capable Link Interface Modules (LIMs) **320** and **350,** and an Mobile Services Module (MSM) **370.** These modules are physically connected to the IMT bus **310** such that signaling and other type messages may be routed internally between all active cards or modules. For simplicity of illustration, only a single pair of LIMs **320** and **350** and a single MSM **370** are included in Figure 7. However, it should be appreciated that the distributed, multi-processor architecture of the mobile services routing node 300 facilitates the deployment of multiple LIM, MSM, and other cards, all of which could be simultaneously active and connected to the IMT bus **310**.

The modules and processes described with respect to Figure 7 may be implemented in hardware, software, or a combination of hardware and software. For example, a module, as described herein may comprise a printed circuit board having a number of chips, such as a microprocessor and one or more memory chips, mounted thereon. The microprocessor may execute the mobile network service functions described herein. An exemplary microprocessor suitable for use with embodiments of the present invention is the x86 or Pentium® microprocessor available from Intel Corporation. In an alternative embodiment, each card or module may include one or more application-specific integrated circuits (ASICs) for performing the STP routing and mobile network service functions described herein. Either implementation or a combination of such implementations is intended to be within the scope of the invention. In addition, although certain functions are described herein as being implemented on separate modules, the present invention is not limited to such an embodiment. For example, in an alternative embodiment of the invention, some or all of the modules described herein may be implemented on a single circuit board having one or more processing circuits mounted thereon.

MASP pair **312** implement the maintenance and administration subsystem functions described above. As the MASP pair **312** are not particularly relevant to a discussion of the flexible routing attributes of the present invention, a detailed discussion of their function is not provided herein. For a comprehensive discussion of additional MASP operations and functionality, the above-referenced Tekelec publications can be consulted.

Focusing now on LIM card functionality, it will be appreciated that LIM **320** is comprised of a number of sub-component processes including, but not limited to; an SS7 MTP level 1 process **322,** an SS7 MTP level 2 process **324,** an I/O buffer or queue **326,** an SS7 MTP level 3 HMDC process **328,** an HMDT process **330,** and an HMRT process **332.** MTP level 1 and 2 processes **322** and **324,** respectively, provide the facilities necessary to send and receive digital data over a particular physical media / physical interface, as well as to provide error detection / correction and sequenced delivery of all SS7 message packets. I/O queue **326** provides for temporary buffering of incoming and outgoing signaling message packets. MTP level 3 HMDC process **328** receives signaling messages from the lower processing layers and performs a discrimination function, effectively determining whether an incoming SS7 message packet requires internal processing or is simply to be through switched. The HMDT process **330** handles the internal routing of SS7 message packets that require additional processing prior to final routing. Once again, it should be appreciated that a LIM card may contain more functional processes than those described above. The above discussion is limited to LIM functionality associated with the basic processing of in-bound signaling messages.

As such, it will be appreciated that the three functional processes associated with LIM **350** shown in Figure 7 are simply those processes that are relevant to a discussion of out-bound LIM operation in the examples of mobile services routing node operation disclosed herein. The processes explicitly shown on the out-bound LIM **350** include an I/O queue **352** and MTP level 1 and 2 processes **356** and **354**, respectively. I/O queue 352 facilitates temporary buffering of incoming and outgoing signaling message packets. MTP level 2 process **354** and an MTP level 1 process **356**, respectively, provide the facilities necessary to send and receive digital data over a particular physical media / physical interface, as well as to provide error detection / correction and sequenced delivery of all SS7 message packets.

### Mobile Services Module (MSM)

In general, an MSM card includes the database and database control processes necessary to provide and generally support the mobile services functionality of the mobile services routing node. The MSM **370** shown in Figure 7 is comprised, in part, of an SCCP subsystem controller known as a Signaling Connection Routing Controller (SCRC) process **372**, a Mobile Services Subsystem Manager (MSSM) process **374**, a cache of dedicated high-speed random access memory (RAM) **376**, which is used to support one or more mobile service processes or applications. More particularly, in the embodiment shown in Figure 7, MSRN **300** is provisioned to support an Equipment Identity Register (EIR) process **378,** an Authentication Center (AuC) process **380,** a Home Location Register (HLR) process **382,** and a World Wide Web (WWW) translation process **384.** It will be appreciated that other mobile service processes such as Visitor Location Register (VLR) and Short Message Service (SMS) could also be simultaneously provisioned in MSRN **300**. SCRC process 372 is responsible for discrimination of signaling messages at the SCCP level, and for distributing the signaling messages to a higher processing level when appropriate. In the configuration shown in Figure 7, the next highest processing level is represented by the mobile services subsystem manager (MSSM) process **374**. MSSM process **374** is responsible for determining which specific mobile service application is required for successful processing of a particular incoming signaling message packet. Again, as will be appreciated from Figure 7, a number of mobile service applications may be simultaneously provisioned on a single MSM card. It will be further appreciated that an embodiment of an MSRN wherein only one mobile service application is provisioned would not necessarily require a separate MSSM process, as the functions typically performed by a MSSM could be included in the mobile service application process (MSAP) and/or in a LIM-based HMDC discrimination process. In one embodiment, MSSM process **374** examines the Subsystem (SSN) component of an SS7 point code - SSN address contained in a received mobile service signaling message. In general, such SSN numbers represent the address of a provisioned application at a given signaling node. In the case of an IS-41 based mobile service signaling message, a SSN value of 6 typically indicates that HLR service is required, a SSN value of 7 indicates that VLR service is required, a SSN value of 9 indicates that EIR service is required, a SSN value of 10 indicates that AuC service is required, and a SSN value of 11 indicates that SMS service is required. It will be appreciated that other SSN values may be "user defined" so as to indicate a new or non-standard mobile service, such as WWW translation service. It will also be appreciated that other mobile service identification schemes may be employed which are equally effective. For instance, in the revision C version of the IS-41 protocol, an MSC Identification Number (MSCIN) and Sender Identification Number (SIN) parameters may be used to perform the same addressing function as a conventional point code - subsystem type identifier.

MSM **370** also includes an HMRT process 386 that is responsible for the routing of any message packets generated by an appropriately provisioned mobile service application. That is, the HMRT process **386** determines to which LIM card a mobile service application generated signaling message packet should be routed for subsequent outbound transmission into the communication network.

It will be appreciated from Figure 7 that MSM **370** is in communication with and serviced by an external provisioning system (EPS), generally indicated by the numeral **400**, that further includes an external operations and administration processor (EOAP) **402** and an associated high-speed, fast access mass data storage device **404.** In general, the EPS **400** provides a mobile network operator with a means to add data, remove data, update data, and generally provision the various mobile service applications that are maintained in the RAM cache **376**. As such, EPS **400** serves as the interface between a mobile network operator and the MSRN mobile service database applications. In a typical implementation, an EPS receives and stores mobile service related information in the mass storage device **404** and then, in turn, is responsible for the controlled downloading this data to the appropriate mobile service applications which it services.

The EOAP subsystem **402** could be implemented in the form of a software application that executes on an industry standard, open systems platform, such as a Sun Microsystems workstation. In such a scenario, the EOAP platform and associated mass data storage system could be interfaced to a MSM card via a high speed Ethernet communication link.

As such external provisioning systems are commonly employed in the telecommunications industry for a variety of applications, a detailed discussion of such external provisioning system functionality will not be presented herein. It should suffice to state that the EPS **400** maintains the MSRN resident mobile service applications with the most current mobile service information available at any given time.

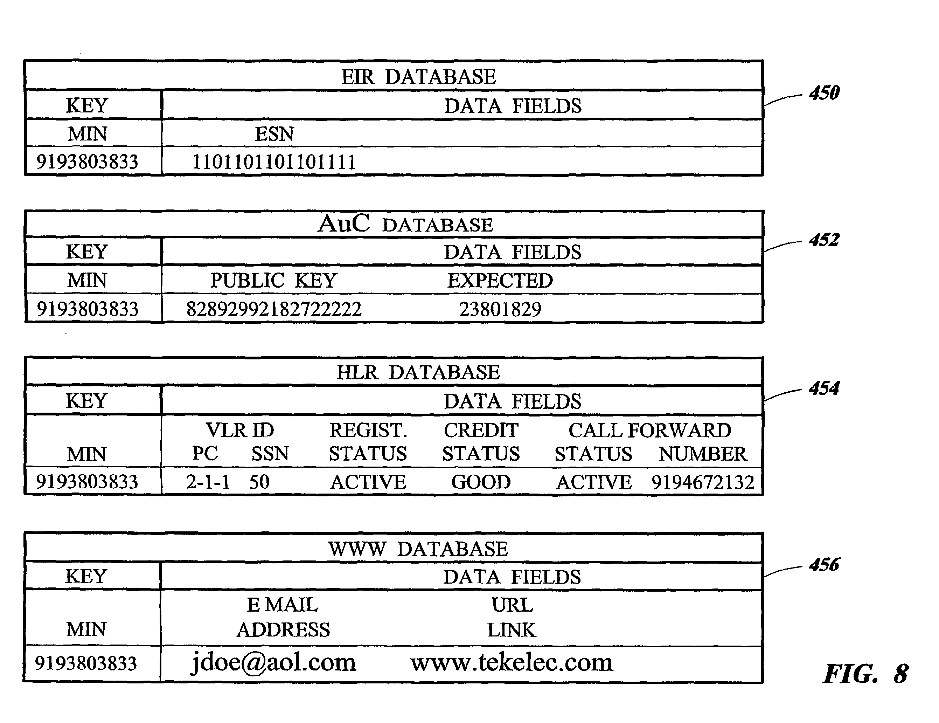

With regard to the specific mobile services provisioned on MSM **370**, it will be appreciated that EIR application **378** contains the logic necessary to interpret an EIR related signaling message that is received from the mobile services subsystem manager (MSSM) process **374.** Furthermore, EIR application **378** includes a database of mobile terminal-related data. Such mobile terminal data might include a listing of subscriber MSISDN or ISMI numbers and the mobile terminal electronic serial numbers (ESNs) associated therewith, as indicated in the sample EIR database **450** presented in Figure 8. It will be further appreciated that EIR application or process **378** is also adapted to generate a new "reply" message in response to the receipt of certain EIR "query" messages. Such reply messages could include information that indicates whether a particular mobile terminal is stolen or perhaps is being fraudulently used, in which case, network service could be denied.

In a manner similar to that described above for EIR application **378**, AuC application **380** contains the logic necessary to interpret an Authentication related signaling message that is received from the mobile services subsystem manager (MSSM) process **374.** AuC application **380** also includes complex mathematical algorithms that are used in conjunction with encryption and authentication key data to prevent fraudulent use of network resources. In essence, it is the responsibility of the AuC application **380** to verify and validate the identity of a mobile terminal that is requesting access to or utilizing network resources. In one particular IS-41-based authentication scheme, each mobile terminal is assigned or programmed with a secret authentication key (A-key). In general, A-key values are not known by customers or equipment distributors and are "readable" by only the mobile terminal manufacturer. Also programmed in the mobile terminal is a private encryption algorithm that is, again, readable only by the manufacturer. When a mobile subscriber attempts to gain access to network resources, a network authentication center sends the mobile terminal a "public encryption key." The mobile terminal being authenticated evaluates it's private encryption algorithm using both the received public key and it's "private" A-key. The value resulting from the encryption algorithm evaluation is subsequently transmitted back to the network authentication center where it is compared to an "expected" value. If the values match, authentication is considered successful and the mobile subscriber is permitted to access the desired network resources. If the values do not match, the mobile subscriber may not be permitted to access the network.

With particular regard to the AuC application **380** that is shown in Figure 7, it will be appreciated that in the simple authentication scenario described above, AuC application **380** further includes an authentication database process 452, an example of which is provided in Figure 8. Authentication database **452** includes a listing of subscriber MSISDN or ISMI numbers with associated public key and expected mobile terminal response values. As such, it will be appreciated that AuC application **380** is also adapted not only to receive and process authentication requests but also to generate messages in response to the receipt of certain AuC related "query" messages.

The example authentication scheme and corresponding AuC database **452** is merely intended to illustrate the general function and concept of mobile terminal authentication. Any number of widely differing authentication schemes, requiring significantly different authentication database structures could easily be employed in a mobile services routing node of the present invention.

HLR application **382** contains the logic necessary to interpret an HLR service related signaling message that is received from the mobile services subsystem manager (MSSM) process **374**. As discussed briefly above, it will be appreciated that HLR functionality supports: features required to maintain a uniform subscriber interface, signaling network access, delivery of incoming calls regardless of mobile subscriber location, subscriber roaming, usage and measurements data collection, fraud protection service, and enhanced calling features. Accordingly, HLR application **382** also includes a database process **454** that can be easily provisioned to maintain and provide access to the mobile subscriber information that is required to implement such mobile services or functionality. It will be appreciated that the HLR database **454** shown in Figure 8 is intended to represent a simplified HLR database structure. Depending upon the particular network and service requirements, such an HLR database process may be comprised of multiple data table structures. With particular regard to the example provided in Figure 8, HLR database **454** includes a listing of subscriber MSISDN or ISMI numbers with associated VLR identification information (e.g., point code and subsystem), subscriber registration status, subscriber credit status information, and subscriber call forward service information.

In a manner similar to those mobile service applications described above, it will be appreciated that HLR application 382 is adapted not only to receive and process HLR related service requests but also to generate messages in response to the receipt of certain such HLR related service request messages.

WWW application **384** contains the logic necessary to interpret a WWW translation service related signaling message that is received from the mobile services subsystem manager (MSSM) process **374**. As discussed briefly above, such WWW translation service could involve the translation of a called or calling party mobile identification number (e.g., MSISDN or IMSI) into a corresponding WWW-capable address, such as an email address or a URL address. Shown in Figure 8 is a sample WWW database process **456** that comprises the WWW application **384**. WWW database **456** includes a listing of subscriber MSISDN or ISMI numbers with associated subscriber email and URL address values. As such, it will be appreciated that WWW application **384** is also adapted not only to receive and process WWW translation requests but also to generate messages in response to the receipt of certain WWW related service messages. It will be further appreciated that WWW database **456** could also be configured to include a relationship between a mobile subscriber identification number (e.g., MSISDN or IMSI) and an Internet Protocol (IP) address and port number.

### Sample MSM Message Flow For HLR Update

Continuing with Figure 7, the path of a typical SS7 mobile service signaling message is traced from reception at the mobile services routing node (MSRN) **300** at the inbound LIM **320,** through the mobile service administration process, and on to the outbound LIM **350.** More particularly, the example presented in Figure 7 and discussed in detail below involves processing associated with a hypothetical IS-41 LocationRequest Invoke type message. Such an IS-41 signaling message is generated when an MSC receives a request to place a call to a mobile subscriber. The MSC formulates a LocationRequest Invoke message to the HLR associated with the called mobile subscriber. The HLR is responsible for providing the MSC with sufficient information about the called mobile subscriber so as to permit the call to be completed. Such information is typically provided by the HLR in the form of a LocationRequest Return Result signaling message.

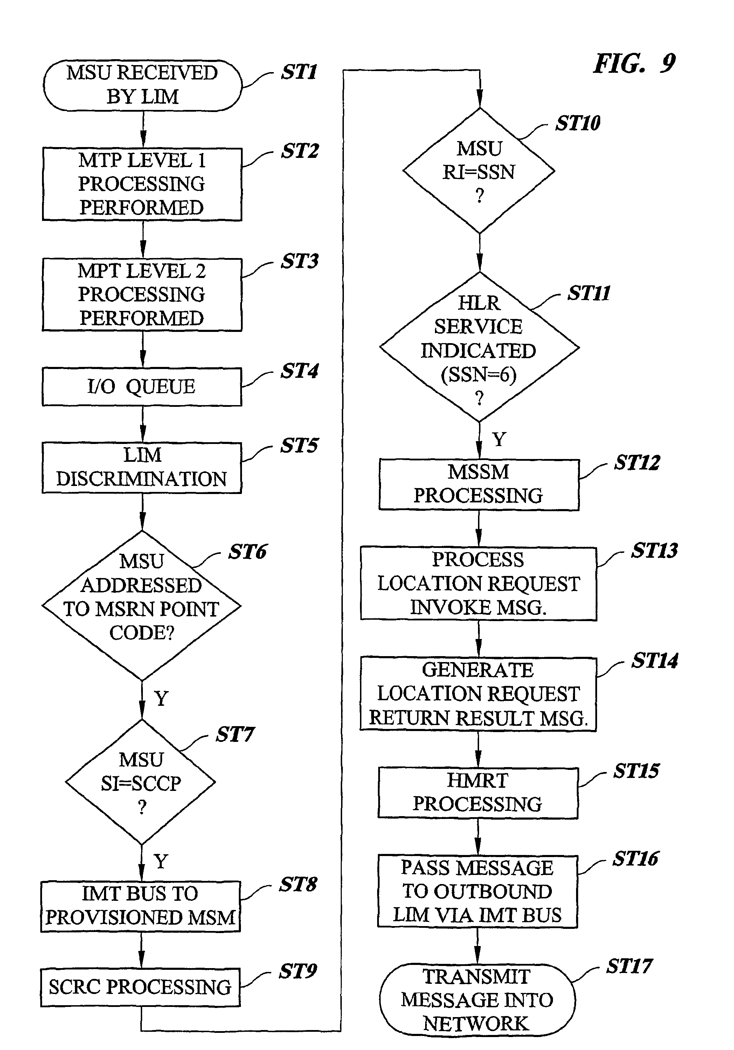

A detailed flow chart of HLR application related processing steps is presented in Figure 9 and may be used in conjunction with the schematic diagram shown in Figure 7 to better understand the general mobile service processing methodology.

Beginning with step **ST1**, an incoming LocationRequest Invoke (LRI) message in the form of an IS-41 MAP MSU is received at inbound LIM module **320.** In steps **ST2** and **ST3,** the incoming LRI message is received and processed by the MTP Level 1 and 2 processes **322** and **324**, respectively. With MTP Level 1 and 2 processing complete, the signaling message packet is temporarily buffered in the I/O queue **326** (**ST4**) before being passed up the stack to the MTP Level 3, HMDC process 328 where SCCP type processing is performed (**ST5**). It will be appreciated by those skilled in the art of SS7 signaling that the SCCP portion of the LRI MSU includes a destination point code (DPC) field, a Called Party Routing Indicator (CdPA RI) field, and a Called Party Subsystem Number (CdPA SSN) field.

In the particular embodiment and example described herein, it is assumed that the destination point code (DPC) field value of the LRI message is set to the point code (PC) of the mobile services routing node (MSRN), the SCCP MSU Called Party Routing Indicator (CdPA RI) field is set to SSN, and the SCCP MSU Called Party Subsystem Number (CdPA SSN) field is set to the HLR SSN of the MSRN **300**. It will also be appreciated that it is not essential that the DPC value contained in an incoming mobile signaling message be set to the PC of the MSRN. In alternate embodiments, an MSRN can be configured to intercept such MAP messages that are addressed to point codes other than it's own.

In the example shown in Figure 7, HMDC process **328** examines the message packet and determines that the DPC of the packet is the PC of the mobile services routing node **300** (**ST6**). Consequently, further processing of the MSU within the MSRN node is assumed to be necessary, and the packet is passed to the HMDT process **330**. HMDT process **330** examines the Service Indicator (SI) field of the MSU, which indicates that the message is of an SCCP type (**ST7**). As such, HMDT process **330** places the MSU on high speed IMT bus **310** for transport to MSM **370** and subsequent mobile service processing (**ST8**).

In step **ST9,** the LRI MSU is received and examined by SCRC process **372** that is resident on MSM **370.** Given that the CdPA RI field of the SCCP portion of the MSU is set to SSN (**ST10**) and the CdPA SSN field of the SCCP MSU is set to the HLR subsystem of the MSRN node (**ST11**), SCRC process **372** forwards the LRI MSU to the mobile services subsystem manager (MSSM) process **374**, as indicated by step **ST12**. In step **ST13**, MSSM process **374** examines the received LRI MSU and determines that the MSU requires HLR service and that HLR application **382** is available. Consequently, the LRI MSU is passed to HLR application **382** where it is processed.

As indicated in Figure 7, HLR process **382** responds to the LocationRequest Invoke message by generating a new, LocationRequest Return Result (LRRR) message (**ST14**). This LRRR message contains information that is stored or is derived from information that is maintained in the HLR database process **454**. The new LRRR MSU is passed from the originating HLR application **382** to the MSM-based HMRT process 386 (**ST15**). HMRT process **386** determines to which LIM card the LRRR message packet should be routed for subsequent outbound transmission. In this case, the HMRT process **386** determines that the desired outbound signaling link associated with the routing of the LRRR MSU is located on LIM **350**. Consequently, the signaling message packet is internally routed across the IMT bus **310** to LIM **350,** where it is generally received by the I/O queue process **352** (**ST16**). Eventually, the LRRR message packet is passed from the I/O queue **352** on to the MTP Level 2 and Level 1 processes **354** and **356**, respectively and subsequently transmitted into the network (**ST17**). Once again, MTP level 1 and 2 layer processes **356** and **354**, respectively, provide the facilities necessary to send and receive digital data over a particular physical media / physical interface, as well as to provide error detection / correction and sequenced delivery of all SS7 message packets transmitted into the SS7 network.

Again, it will be appreciated that the particular HLR example presented above is merely illustrative of the basic MSRN architecture and MSM processing methodology. Any number of mobile services could be simultaneously provisioned on a MSRN node, and the fundamental operation of the associated MSM-based mobile service applications would be similar to the sample HLR application scenario presented above. In fact, it will be appreciated that in the case of simultaneous provisioning of multiple mobile service applications on-board a single MSRN node, a response message generated by one mobile service application may be destined for another MSM-based mobile service application residing in the same MSRN node. Furthermore, an incoming signaling message received and processed by one MSM-based mobile service application may effectively trigger the generation of a new, related signaling message by another MSM-based mobile service application residing in the same MSRN node.

In any event, it will be appreciated that VLR, EIR, AuC, SMS, WWW and other mobile service applications could be implemented and operated in a manner similar to that described above for MSM-based HLR service.

In view of the protocol usage diagram presented earlier in Figure 4, the unique functional characteristics of the mobile services routing node of the present invention can now be more fully appreciated. Previous to the MSRN of the present invention, STP nodes employed in mobile communication networks typically did not exploit or make use of information contained in those protocol layers above the SCCP level. The ability to interpret and process information contained in the IS-41 MAP level, while still performing STP-like routing functions, is a unique capability that allows a MSRN equipped mobile network operator to realize significant operational and economic advantages in the wireless telecommunications marketplace.

## Claims

1. A network element for performing conventional Signal Transfer Point (STP) routing operations and additionally processing mobile service related signaling messages in a communications network, the network element comprising:
(a) a communication module capable of transmitting signaling messages to, receiving signaling messages from, and routing signaling messages within a communications network, thereby providing an STP service;
(b) a mobile services module (MSM) including at least one mobile service application process (MSAP) for performing a mobile services function including at least one of an HLR function, a VLR function, an EIR function, an SMSC function, and an AuC function in response to a first signaling message received by the communication module; and
(c) a discrimination process for processing the signaling message received by the communication module and subsequently directing the signaling message to the MSM based on at least one parameter in the first signaling message.

2. The network element of claim 1 wherein the first signaling message is a Signaling System 7 (SS7) signaling message.

3. The network element of claim 2 wherein the Signaling System 7 (SS7) signaling message includes a Mobile Application Part (MAP).

4. The network element of claim 1 wherein the communication network is an Internet Protocol (IP) network carrying IP encapsulated SS7 Mobile Application Part (MAP) messages.

5. The network element of claim 1 wherein the communication module is a Signaling System 7 (SS7) Link Interface Module (LIM).

6. The network element of claim 1 wherein the communication module is an Internet Protocol (IP) Data Communication Module (DCM).

7. The network element of claim 1 wherein the MSM includes a mobile service subsystem manager (MSSM) for receiving the first signaling message and subsequently directing the first signaling message to one of a plurality of provisioned MSAPs.

8. The network element of claim 1 wherein the MSAP is a Home Location Register application process.

9. The network element of claim 1 wherein the MSAP is a Visitor Location Register application process.

10. The network element of claim 1 wherein the MSAP is an Equipment ldentity Register application process.

11. The network element of claim 1 wherein the MSAP is a Authentication Center application process.

12. The network element of claim 1 wherein the MSAP is a Short Message Service Center application process.

13. The network element of claim 1 wherein the MSAP is a World Wide Web translation application process.

14. The network element of claim 1 wherein the MSAP is integral with and contained within the network element.

15. The network element of claim 1 wherein the MSAP is located on an external database server communicatively coupled to the network element.

16. The network element of claim 1 wherein the MSM includes a database for providing the mobile services function and the database is maintained in high speed, random access memory.

17. The network element of claim 1 wherein the MSM includes a database for providing the mobile services function and database is maintained on a high speed, optical disc storage medium.

18. The network element of claim 1 comprising an external MSAP provisioning system communicatively coupled to the MSM.

19. The network element of claim 18 wherein the external provisioning system includes an high speed, mass data storage device.

20. A mobile services routing node comprising:
(a) a first communication module for performing SS7 message transfer part routing functions including routing first SS7 messages to outbound signaling links and second SS7 signaling messages to internal communications modules for further processing, thereby providing STP services;
(b) a mobile services database for storing information for providing a mobile communications service including at least one of HLR service, VLR service, AuC service, EIR service, and SMSC service; and
(c) a mobile services application process receiving at least some of the second SS7 signaling messages and providing the mobile communications service based on the information contained in the mobile services database in response to the second SS7 signaling message.

21. The mobile services routing node of claim 20 wherein the mobile services database is a home location register (HLR) database for storing information regarding home subscribers, the mobile services application process is an HLR process, and the mobile communications service is an HLR service.

22. The mobile services routing node of claim 20 wherein the mobile services database is an equipment identity register (EIR) database, the mobile services application is an EIR process, and the mobile communications service is an EIR service.

23. The mobile services routing node of claim 20 wherein the mobile services database is an authentication center (AuC) database, the mobile services application process is an AuC process, and the mobile communications service is an AuC service.

24. The mobile services routing node of claim 20 wherein the mobile services database is a visitor location register (VLR) database for storing information regarding visiting subscribers, the mobile services application process is a VLR process, and the mobile communications service is a VLR service.

25. The mobile services routing node of claim 20 wherein the mobile services database is a world wide web (WWW) translation database for storing information for translating mobile subscriber information in the second call signaling messages to WWW address information, the mobile services application process is a WWW translation service, and the mobile communications service is a WWW translation service.

26. A method for processing and routing mobile service related signaling message by a mobile services routing node (MSRN) in a communications network, the method comprising:
at a mobile services routing node:
(a) receiving a signaling message from a communication network;
(b) providing STP services for the signaling message;
(c) determining whether the signaling message requires mobile service processing;
(d) in response to determining that the signaling message requires mobile service processing, directing the message to a mobile service application process (MSAP) provisioned with the MSRN; and
(e) at the MSAP, providing a mobile communication service including at least one of HLR service, VLR service, EIR service, AuC service, and SMSC service in response to the signaling message.

27. The method of claim 26 wherein the signaling message is a Signaling System 7 (SS7) signaling message.

28. The method of claim 26 wherein the Signaling System 7 (SS7) signaling message includes a Mobile Application Part (MAP).

29. The method of claim 26 wherein receiving a signaling message from a communications network includes receiving the signaling message from a Signaling System 7 (SS7) network.

30. The method of claim 26 wherein receiving a signaling message from a communications network includes receiving the signaling message from an Internet Protocol (IP) network carrying IP encapsulated SS7 Mobile Application Part (MAP) messages.

31. The method of claim 26 wherein receiving a signaling message includes receiving a signaling message addressed to a point code of the MSRN.

32. The method of claim 26 wherein determining whether the signaling message contains a message which requires mobile service processing includes examining information in the Service Indicator Octet (SIO) of the signaling message.

33. The method of claim 26 wherein determining whether the signaling message requires mobile service processing includes examining information in a Signaling Connection Control Part (SCCP) layer of the signaling message.

34. The method of claim 33 wherein examining the SCCP information includes examining a subsystem (SSN) value that identifies the type of mobile service required.

35. The method of claim 26 wherein providing a mobile communications service includes generating a mobile communications signaling message in response to the signaling message.

36. The method of claim 26 wherein providing a mobile communications service at the MSAP includes forwarding the signaling message to a second MSAP and generating a mobile communications message at the second MSAP.

37. The method of claim 26 wherein providing a mobile communications service includes providing a home location register (HLR) service.

38. The method of claim 26 wherein providing a mobile communications service includes providing a visitor location register (VLR) service.

39. The method of claim 26 wherein providing a mobile communications service includes providing an equipment identity register (EIR) service.

40. The method of claim 26 wherein providing a mobile communications service includes providing an Authentication Center (AuC) service.

41. The method of claim 26 wherein providing a mobile communications service includes providing a short message service.

42. The method of claim 26 wherein providing a mobile communications service includes providing a WWW translation service.

43. The method of claim 37 wherein the signaling message is a location request invoke message, providing an HLR service includes performing a lookup in an HLR database located inside the MSRN, and formulating a location request response message containing mobile subscriber information extracted from the HLR database.

44. The method of claim 38 wherein the signaling message is a location request invoke message, providing a VLR service includes performing a lookup in a VLR database located inside the MSRN, and formulating a location request response message containing mobile subscriber information extracted from the VLR database.

45. The method of claim 39 wherein the signaling message is an EIR query message, providing an EIR service includes performing a lookup in an EIR database located inside the MSRN to determine whether a mobile handset associated with the EIR query is being fraudulently used, and formulating an EIR response message to the EIR query.

46. The method of claim 40 wherein the signaling message is an authentication request message and providing an AuC service includes:
(a) performing a lookup in an AuC database based on the authentication request message;
(b) providing a response including a public encryption key to a mobile handset;
(c) receiving a response from the mobile handset; and
(d) granting the mobile handset access to a mobile communications network in response to a value in the response from the mobile handset being equal to an expected value.

47. The method of claim 41 wherein providing a short message service includes sending a short message service message to a mobile subscriber in response to the signaling message.

48. The method of claim 42 wherein providing a WWW translation service includes performing a lookup in a WWW database located inside the MSRN and extracting WWW address information for a mobile subscriber based on information contained within the signaling message.

## Patentansprüche

1. Netzwerkelement zur Ausführung eines konventionellen Signalübertragungsknotens (STP) zum Routing von Transaktionen und zusätzlich zur Verarbeitung von mobilen Diensten, ähnlich Signalisierungsnachrichten in einem Kommunikationsnetzwerk,
wobei das Netzwerkelement aufweist:
a) ein Kommunikationsmodul, welches zur Übertragung von Signalisierungsnachrichten, zum Empfangen von Signalisierungsnachrichten und zum Routing von Signalisierungsnachrichten geeignet ist und dabei einen STP-Dienst bereitstellt;
b) ein mobiles Dienstmodul (MSM), welches mindestens einen mobilen Dienstapplikationsprozess (MSAP) zur Ausführung einer mobilen Dienstfunktion aufweist, welche mindestens eine HLR-Funktion, eine VLR-Funktion, eine EIR-Funktion, eine SMSC-Funktion oder eine AuC-Funktion als Antwort auf eine erste Signalisierungsnachricht, empfangen von dem Kommunikationsmodul, aufweist; und
c) einen Unterscheidungsprozess zur Verarbeitung der Signalisierungsnachricht, empfangen von dem Kommunikationsmodul, und anschließendem Leiten der Signalisierungsnachricht zu dem MSM, basierend auf mindestens einem Parameter in der ersten Signalisierungsnachricht.

2. Netzwerkelement nach Anspruch 1,
wobei die erste Signalisierungsnachricht eine Signalisierungssystem-7(SS7)-Signalisierungsnachricht ist.

3. Netzwerkelement nach Anspruch 2,
wobei die Signalisierungssystem-7(SS7)-Signalisierungsnachricht einen Mobilapplikationsteil (MAP) beinhaltet.

4. Netzwerkelement nach Anspruch 1,
wobei das Kommunikationsnetzwerk ein Internet-Protokoll(IP)-Netzwerk ist, welches innerhalb des Internet-Protokolls (IP) verkapselte (SS7)-Mobilapplikationsteil (MAP) Nachrichten überträgt.

5. Netzwerkelement nach Anspruch 1,
wobei das Kommunikationsmodul ein Signalisierungssystem-7(SS7)-Verknüpfungsschnittstellenmodul (LIM) ist.

6. Netzwerkelement nach Anspruch 1,
wobei das Kommunikationsmodul ein Internet-Protokoll(IP)-Datenkomrnunikationsmodul (DCM) ist.

7. Netzwerkelement nach Anspruch 1,
wobei das MSM eine mobile Dienstsubsystemsteuereinheit (MSSM) zum Empfangen der ersten Signalisierungsnachricht und anschließendem Leiten der ersten Signalisierungsnachricht zu einem aus einer Mehrzahl bereitgestellter MSAPs beinhaltet.

8. Netzwerkelement nach Anspruch 1,
wobei der MSAP ein Heimstandortregisterapplikationsprozess ist.

9. Netzwerkelement nach Anspruch 1,
wobei der MSAP ein Besucherstandortregisterapplikationsprozess ist.

10. Netzwerkelement nach Anspruch 1,
wobei der MSAP ein Ausstattungsidentifizierungsregisterapplikationsprozess ist.

11. Netzwerkelement nach Anspruch 1,
wobei der MSAP ein Authentifizierungszentralapplikationsprozess ist.

12. Netzwerkelement nach Anspruch 1,
wobei der MSAP ein Kurznachrichtendienstzentralapplikationsprozess ist.

13. Netzwerkelement nach Anspruch 1,
wobei der MSAP ein World-Wide-Web-Übersetzungsapplikationsprozess ist.

14. Netzwerkelement nach Anspruch 1,
wobei der MSAP in dem Netzwerkelement eingebaut und beinhaltet ist.

15. Netzwerkelement nach Anspruch 1,
wobei der MSAP auf einem externen Datenbankserver vorgesehen ist, welcher der Kommunikation dienend mit dem Netzwerkelement gekoppelt ist.

16. Netzwerkelement nach Anspruch 1,
wobei das MSM eine Datenbank zur Bereitstellung der mobilen Dienstfunktion beinhaltet und die Datenbank in einem Hochgeschwindigkeits-Direktzugriffsspeicher vorgesehen ist.

17. Netzwerkelement nach Anspruch 1,
wobei das MSM eine Datenbank zur Bereitstellung der mobilen Dienstfunktion beinhaltet und die Datenbank in einem optischen Hochgeschwindigkeits-Plattenspeichermedium vorgesehen ist.

18. Netzwerkelement nach Anspruch 1,
wobei das Netzwerkelement ein externes MSAP-Versorgungssystem aufweist, welches der Kommunikation dienend mit dem MSM gekoppelt ist.

19. Netzwerkelement nach Anspruch 18,
wobei das externe Versorgungssystem eine Hochgeschwindigkeitsmassendatenspeichervorrichtung beinhaltet.

20. Ein mobiler Diensteroutingknoten, welcher aufweist:
a) ein erstes Kommunikationsmodul zur Ausführung von SS7-Nachrichtenübertragungsteilroutingfunktionen, welches ein Routing von ersten SS7-Nachrichten zu auslaufenden Signalisierungsverknüpfungen und ein Routing von zweiten SS7-Signalisierungsnachrichten zu internen Kommunikationsmodulen zur weiteren Verarbeitung beinhaltet und dabei STP-Dienste bereitstellt;
b) eine mobile Dienstedatenbank zum Speichern von Informationen für eine Bereitstellung eines mobilen Kommunikationsdienstes, welcher mindestens einen HLR-Dienst, einen VLR-Dienst, einen AuC-Dienst, einen EIR-Dienst oder einen SMSC-Dienst beinhaltet;
c) einen mobilen Diensteapplikationsprozess, welcher mindestens einige der zweiten SS7-Signalisierungsnachrichten empfängt und welcher den mobilen Kommunikationsdienst bereitstellt, der auf der Information basiert, welche in der mobilen Dienstdatenbank als Antwort auf die zweite SS7-Signalisierungsnachricht enthalten ist.

21. Mobiler Diensteroutingknoten nach Anspruch 20,
wobei die mobile Dienstedatenbank eine Heimstandortregister(HLR)-Datenbank zum Speichern von Information in Bezug auf Heimteilhehmer ist, der mobile Diensteapplikationsprozess ein HLR-Prozess ist und der mobile Kommunikationsdienst ein HLR-Dienst ist.

22. Mobiler Diensteroutingknoten nach Anspruch 20,
wobei die mobile Dienstedatenbank eine Ausstattungsidentifizierungsregister-(EIR)-Datenbank ist, die mobile Diensteapplikation ein EIR-Prozess ist und der mobile Kommunikationsdienst ein EIR-Dienst ist.

23. Mobiler Diensteroutingknoten nach Anspruch 20,
wobei die mobile Dienstedatenbank eine Authentifizierungszentral(AuC)-Datenbank ist, der mobile Diensteapplikationsprozess ein AuC-Prozess ist und der mobile Kommunikationsdienst ein AuC-Dienst ist.

24. Mobiler Diensteroutingknoten nach Anspruch 20,
wobei die mobile Dienstedatenbank eine Besucherstandortregister(VLR)-Datenbank zum Speichern von Informationen in Bezug auf besuchende Teilnehmer ist, der mobile Diensteapplikationsprozess ein VLR-Prozess ist und der mobile Kommunikationsdienst ein VLR-Dienst ist.

25. Mobiler Diensteroutingknoten nach Anspruch 20,
wobei die mobile Dienstedatenbank eine World-Wide-Web-Übersetzungsdatenbank zum Speichern von Informationen für ein Übersetzen von mobiler Teilnehmerinformation in die zweiten Rufsignalisierungsnachrichten zur WWW-Adressinformation ist, der mobile Diensteapplikationsprozess ein WWW-Übersetzungsdienst ist und der mobile Kommunikationsdienst ein WWW-Übersetzungsdienst ist.

26. Verfahren zur Verarbeitung und zum Routing von einem mobilen Dienst in Bezug auf eine Signalisierungsnachricht durch einen mobilen Diensteroutingknoten (MSRN) in einem Kommunikationsnetzwerk, wobei das Verfahren aufweist:
auf einem mobilen Diensteroutingknoten:
a) Empfangen einer Signalisierungsnachricht von einem Kommunikationsnetzwerk;
b) Bereitstellen von STP-Diensten für die Signalisierungsnachricht;
c) Entscheiden, ob die Signalisierungsnachricht mobile Dienstverarbeitung erfordert;
d) als Antwort auf das Entscheiden, dass die Signalisierungsnachricht mobile Dienstverarbeitung erfordert, Leiten der Nachricht zu einem mobilen Dienstapplikationsprozess (MSAP), welcher mit dem MSRN bereitgestellt wird; und
e) mittels des MSAPs Bereitstellen eines mobilen Kommunikationsdienstes, welcher mindestens einen HLR-Dienst, einen VLR-Dienst, einen EIR-Dienst, einen AuC-Dienst oder einen SMSC-Dienst als Antwort auf die Signalisierungsnachricht beinhaltet.

27. Verfahren nach Anspruch 26,
wobei die Signalisierungsnachricht eine Signalisierungssystem-7(SS7)-Signalisierungsnachricht ist.

28. Verfahren nach Anspruch 26,
wobei die Signalisierungssystem-7(SS7)-Signalisierungsnachricht einen Mobilapplikationsteil (MAP) beinhaltet.

29. Verfahren nach Anspruch 26,
wobei das Empfangen einer Signalisierungsnachricht von einem Kommunikationsnetzwerk ein Empfangen der Signalisierungsnachricht von einem Signalisierungssystem-7(SS7)-Netzwerk beinhaltet.

30. Verfahren nach Anspruch 26,
wobei ein Empfangen einer Signalisierungsnachricht von einem Kommunikationsnetzwerk ein Empfangen der Signalisierungsnachricht von einem Internet-Protokoll(IP)-Netzwerk beinhaltet, welches innerhalb des Internet-Protokolls (IP) die eingekapselte SS7-Mobilapplikationsteil(MAP)-Nachricht beinhaltet.

31. Verfahren nach Anspruch 26,
wobei das Empfangen einer Signalisierungsnachricht ein Empfangen einer Signalisierungsnachricht, welche zu einem Knotencode eines mobilen MSRN adressiert ist, beinhaltet.

32. Verfahren nach Anspruch 26,
wobei das Entscheiden, ob die Signalisierungsnachricht eine Nachricht beinhaltet, welche eine mobile Dienstverarbeitung erfordert, ein Prüfen der Information in dem Dienstindikatorachtbitzeichen (SIO) der Signalisierungsnachricht, beinhaltet.

33. Verfahren nach Anspruch 26,
wobei das Entscheiden, ob die Signalisierungsnachricht eine mobile Dienstverarbeitung erfordert, ein Prüfen der Information in einem Signalisierungsverbindungssteuerteil(SCCP)-Bereich der Signalisierungsnachricht, beinhaltet.

34. Verfahren nach Anspruch 33,
wobei das Prüfen der SCCP-Information ein Prüfen eines Subsystem (SSN)-Wertes beinhaltet, der den Typ des erforderlichen mobilen Dienstes identifiziert.

35. Verfahren nach Anspruch 26,
wobei das Bereitstellen eines mobilen Kommunikationsdienstes ein Generieren einer mobilen Kommunikationssignalisierungsnachricht als Antwort auf die Signalisierungsnachricht beinhaltet.

36. Verfahren nach Anspruch 26,
wobei das Bereitstellen eines mobilen Kommunikationsdienstes mittels des MSAP ein Weiterleiten der Signalisierungsnachricht zu einem zweiten MSAP und ein Generieren einer mobilen Kommunikationsnachricht mittels des zweiten MSAPs beinhaltet.

37. Verfahren nach Anspruch 26,
wobei das Bereitstellen eines mobilen Kommunikationsdienstes ein Bereitstellen eines Heimstandortregister(HLR)-Dienstes beinhaltet.

38. Verfahren nach Anspruch 26,
wobei das Bereitstellen eines mobilen Kommunikationsdienstes ein Bereitstellen eines Besucherstandortregister(VLR)-Dienstes beinhaltet.

39. Verfahren nach Anspruch 26,
wobei das Bereitstellen eines mobilen Kommunikationsdienstes ein Bereitstellen eines Ausstattungsidentifzierungsregister(EIR)-Dienstes beinhaltet.

40. Verfahren nach Anspruch 26,
wobei das Bereitstellen eines mobilen Kommunikationsdienstes ein Bereitstellen eines Authentifzierungszentral(AuC)-Dienstes beinhaltet.

41. Verfahren nach Anspruch 26,
wobei das Bereitstellen eines mobilen Kommunikationsdienstes ein Bereitstellen eines Kurznachrichtendienstes beinhaltet.

42. Verfahren nach Anspruch 26,
wobei das Bereitstellen eines mobilen Kommunikationsdienstes ein Bereitstellen eines WWW-Übersetzungsdienstes beinhaltet.

43. Verfahren nach Anspruch 37,
wobei die Signalisierungsnachricht eine Ortsanfrageanrufennachricht ist, welche einen HLR-Dienst bereitstellt, der ein Ausführen eines Nachschlagens in einer HLR-Datenbank, die innerhalb des MSRN vorgesehen ist, und ein Formulieren einer Ortsanfrageantwortnachricht, die die mobile Teilnehmerinformation beinhaltet, die aus der HLR-Datenbank extrahiert wird, beinhaltet.

44. Verfahren nach Anspruch 38,
wobei die Signalisierungsnachricht eine Ortsanfrageanrufennachricht, welche einen VLR-Dienst bereitstellt, der ein Ausführen eines Nachschlagens in einer VLR-Datenbank, die innerhalb des MSRN vorgesehen ist, und ein Formulieren einer Ortsanfrageanrufennachricht, die die mobile Teilnehmerinformation beinhaltet, die aus der VLR-Datenbank extrahiert wird, beinhaltet.

45. Verfahren nach Anspruch 39,
wobei die Signalisierungsnachricht eine EIR-Anfragenachricht ist, welche einen EIR-Dienst bereitstellt, der ein Ausrühren eines Nachschlagens in einer EIR-Datenbank, die innerhalb des MSRN vorgesehen ist, beinhaltet um zu entscheiden, ob ein mobiler Handapparat, der mit der EIR-Anfrage zugeordnet ist, betrügerisch verwendet wird und der ein Formulieren einer EIR-Antwortnachricht zu der EIR-Anfrage beinhaltet.

46. Verfahren nach Anspruch 40,
wobei die Signalisierungsnachricht eine Authentifizierungsanfragenachricht ist und einen AuC-Dienst bereitstellt, welcher beinhaltet:
a) Ausführen eines Nachschlagens in einer AuC-Datenbank, welche auf der Authentifizierungsanfragenachricht basiert;
b) Bereitstellen einer Antwort, welche einen öffentlichen Chiffrierungsschlüssel zu einem mobilen Handapparat beinhaltet;
c) Empfangen einer Antwort von dem mobilen Handapparat; und
d) Bewilligen eines mobilen Handapparatzugriffs zu einem mobilen Kommunikationsnetzwerk als Antwort auf einen Wert in der Antwort von dem mobilen Handapparat, welcher gleich einem erwarteten Wert ist.

47. Verfahren nach Anspruch 41,
wobei das Bereitstellen eines Kurznachrichtendienstes ein Senden einer Kurznachrichtendienstnachricht zu einem mobilen Teilnehmer als Antwort auf die Signalisierungsnachricht beinhaltet.

48. Verfahren nach Anspruch 42,
wobei das Bereitstellen eines WWW-Übersetzungsdienstes ein Ausrühren eines Nachschlagens in einer WWW-Datenbank, die innerhalb des MSRN vorgesehen ist, und ein Extrahieren der WWW-Adressinformation für einen mobilen Teilnehmer, welche auf der Information basiert, die innerhalb der Signalisierungsnachricht enthalten ist, beinhaltet.

## Revendications

1. Élément de réseau pour effectuer des opérations classiques d'acheminement par Point de Transfert de Signal (STP) et pour traiter de plus des messages de signalisation liés du service mobile dans un réseau de communication, l'élément de réseau comprenant :
(a) un module de communication susceptible de transmettre des messages de signalisation à, de recevoir des messages de signalisation de, et d'acheminer des messages de signalisation à l'intérieur d'un réseau de communication, définissant de ce fait un service STP ;
(b) un module de services mobiles (MSM) incluant au moins un processus applicatif de service mobile (MSAP) pour effectuer une fonction de services mobiles incluant au moins l'une d'une fonction HLR, d'une fonction VLR, d'une fonction EIR, d'une fonction SMSC et d'une fonction AuC en réponse à un premier message de signalisation reçu par le module de communication ; et
(c) un processus de discrimination pour traiter le message de signalisation reçu par le module de communication et pour diriger par la suite le message de signalisation vers le MSM sur la base d'au moins un paramètre dans le premier message de signalisation.

2. Élément de réseau selon la revendication 1, dans lequel le premier message de signalisation est un message de signalisation de Système de Signalisation numéro 7 (SS7).

3. Élément de réseau selon la revendication 2, dans lequel le message de signalisation de Système de Signalisation numéro 7 (SS7) comprend un applicatif du service mobile (MAP).

4. Élément de réseau selon la revendication 1, dans lequel le réseau de communication est un réseau à Protocole Internet (IP) transportant des messages d'applicatif du service mobile (MAP) de SS7 d'IP encapsulés.

5. Élément de réseau selon la revendication 1, dans lequel le module de communication est un Module d'Interface de Liaison (LIM) de Système de Signalisation numéro 7 (SS7).

6. Élément de réseau selon la revendication 1, dans lequel le module de communication est un Module de Communication de Données (DCM) de Protocole Internet (IP).

7. Élément de réseau selon la revendication 1, dans lequel le MSM comprend un gestionnaire de sous-système de service mobile (MSSM) pour recevoir le premier message de signalisation et pour diriger par la suite le premier message de signalisation vers l'un d'une pluralité de MSAP mis à disposition.

8. Élément de réseau selon la revendication 1, dans lequel le MSAP est un processus applicatif d'enregistreur de localisation nominal (HLR).

9. Élément de réseau selon la revendication 1, dans lequel le MSAP est un processus applicatif d'enregistreur de localisation de visiteurs (VLR).

10. Élément de réseau selon la revendication 1, dans lequel le MSAP est un processus applicatif d'enregistreur d'identité d'équipement (EIR).

11. Élément de réseau selon la revendication 1, dans lequel le MSAP est un processus applicatif de centre d'authentification (AuC).

12. Élément de réseau selon la revendication 1, dans lequel le MSAP est un processus applicatif de Centre de Service de Message Court (SMSC).

13. Élément de réseau selon la revendication 1, dans lequel le MSAP est un processus applicatif de transposition du Web.

14. Élément de réseau selon la revendication 1, dans lequel le MSAP est d'un seul tenant avec l'élément de réseau et est contenu dans ce dernier.

15. Élément de réseau selon la revendication 1, dans lequel le MSAP est placé sur un serveur de base de données externe couplé par communication à l'élément de réseau.

16. Élément de réseau selon la revendication 1, dans lequel le MSM comprend une base de données pour procurer la fonction de services mobiles, et la base de données est maintenue dans une mémoire à accès direct, à haute vitesse.

17. Élément de réseau selon la revendication 1, dans lequel le MSM comprend une base de données pour procurer la fonction de services mobiles, et la base de données est maintenue sur un support de stockage à disque optique à haute vitesse.

18. Élément de réseau selon la revendication 1, comprenant un système externe de mise à disposition de MSAP couplé par communication au MSM.

19. Élément de réseau selon la revendication 18, dans lequel le système externe de mise à disposition comprend un dispositif de stockage de données de grande capacité à haute vitesse.

20. Noeud d'acheminement de services mobiles comprenant :
(a) un premier module de communication pour effectuer des fonctions d'acheminement d'applicatif de transfert de message SS7 comprenant l'acheminement de premiers messages SS7 vers des liaisons de signalisation en partance et de seconds messages de signalisation SS7 vers des modules internes de communication pour un traitement supplémentaire, procurant de ce fait des services STP ;
(b) une base de données de services mobiles pour stocker des informations pour procurer un service mobile de communication comprenant au moins l'un du service HLR, du service VLR, du service AuC, du service EIR et du service SMSC ; et
(c) un processus applicatif de services mobiles recevant au moins certains des seconds messages de signalisation SS7 et procurant le service mobile de communication sur la base des informations contenues dans la base de données de services mobiles en réponse au second message de signalisation SS7.

21. Noeud d'acheminement de services mobiles selon la revendication 20, dans lequel la base de données de services mobiles est une base de données formant enregistreur de localisation nominal (HLR) pour stocker des informations concernant des abonnés nominaux, le processus applicatif de services mobiles est un processus HLR, et le service mobile de communication est un service HLR.

22. Noeud d'acheminement de services mobiles selon la revendication 20, dans lequel la base de données de services mobiles est une base de données formant enregistreur d'identité d'équipement (EIR), l'applicatif de services mobiles est un processus EIR, et le service mobile de communication est un service EIR.

23. Noeud d'acheminement de services mobiles selon la revendication 20, dans lequel la base de données de services mobiles est une base de données formant centre d'authentification (AuC), le processus applicatif de services mobiles est un processus AuC, et le service mobile de communication est un service AuC.

24. Noeud d'acheminement de services mobiles selon la revendication 20, dans lequel la base de données de services mobiles est une base de données formant enregistreur de localisation des visiteurs (VLR) pour stocker des informations concernant des abonnés visiteurs, le processus applicatif de services mobiles est un processus VLR, et le service mobile de communication est un service VLR.

25. Noeud d'acheminement de services mobiles selon la revendication 20, dans lequel la base de données de services mobiles est une base de données de transposition Web (WWW) pour stocker des informations pour transposer des informations d'abonné du service mobile dans les seconds messages de signalisation d'appel en informations d'adresse WWW, le processus applicatif de services mobiles est un service de transposition WWW, et le service mobile de communication est un service de transposition WWW.

26. Procédé pour traiter et acheminer un message de signalisation lié de service mobile par un noeud d'acheminement de services mobiles (MSRN) dans un réseau de communication, le procédé comprenant les étapes consistant à :
au niveau d'un noeud d'acheminement de services mobiles :
(a) recevoir un message de signalisation en provenance d'un réseau de communication ;
(b) fournir des services STP pour le message de signalisation ;
(c) déterminer si le message de signalisation exige un traitement de service mobile ;
(d) en réponse à la détermination que le message de signalisation exige un traitement de service mobile, envoyer le message à un processus applicatif de service mobile (MSAP) mis à disposition avec le MSRN ; et
(e) au niveau du MSAP, fournir un service mobile de communication comprenant au moins l'un d'un service HLR, d'un service VLR, d'un service EIR, d'un service AuC, et d'un service SMSC en réponse au message de signalisation.

27. Procédé selon la revendication 26, dans lequel le message de signalisation est un message de signalisation de Système de Signalisation numéro 7 (SS7).

28. Procédé selon la revendication 26, dans lequel le message de signalisation de Système de Signalisation numéro 7 (SS7) comprend un applicatif du service mobile (MAP).

29. Procédé selon la revendication 26, dans lequel la réception d'un message de signalisation en provenance d'un réseau de communication comprend la réception du message de signalisation en provenance d'un réseau de Système de Signalisation numéro 7 (SS7).

30. Procédé selon la revendication 26, dans lequel la réception d'un message de signalisation en provenance d'un réseau de communication comprend la réception du message de signalisation en provenance d'un réseau de Protocole d'Internet (IP) transportant des messages d'applicatif du service mobile (MAP) de SS7 d'IP encapsulés.

31. Procédé selon la revendication 26, dans lequel la réception d'un message de signalisation comprend la réception d'un message de signalisation adressé à un code de point du MSRN.

32. Procédé selon la revendication 26, dans lequel la détermination si le message de signalisation contient un message qui exige un traitement de service mobile comprend l'examen d'informations dans l'Octet Indicateur de Service (SIO) du message de signalisation.

33. Procédé selon la revendication 26, dans lequel la détermination si le message de signalisation exige un traitement de service mobile comprend l'examen d'informations dans une couche applicative de commande de connexion de signalisation (SCCP) du message de signalisation.

34. Procédé selon la revendication 33, dans lequel l'examen des informations SCCP comprend l'examen d'une valeur de sous-système (SSN) qui identifie le type de service mobile nécessaire.

35. Procédé selon la revendication 26, dans lequel la fourniture d'un service mobile de communication comprend la production d'un message de signalisation de communication du service mobile en réponse au message de signalisation

36. Procédé selon la revendication 26, dans lequel la fourniture d'un service mobile de communication au niveau du MSAP comprend l'expédition du message de signalisation à un second MSAP et la production d'un message de communication du service mobile au niveau du second MSAP.

37. Procédé selon la revendication 26, dans lequel la fourniture d'un service mobile de communication comprend la fourniture d'un service d'enregistreur de localisation nominal (HLR).

38. Procédé selon la revendication 26, dans lequel la fourniture d'un service mobile de communication comprend la fourniture d'un service d'enregistreur de localisation des visiteurs (VLR).

39. Procédé selon la revendication 26, dans lequel la fourniture d'un service mobile de communication comprend la fourniture d'un service d'enregistreur d'identité d'équipement (EIR).

40. Procédé selon la revendication 26, dans lequel la fourniture d'un service mobile de communication comprend la fourniture d'un service de centre d'authentification (AuC).

41. Procédé selon la revendication 26, dans lequel la fourniture d'un service mobile de communication comprend la fourniture d'un service de message court.

42. Procédé selon la revendication 26, dans lequel la fourniture d'un service mobile de communication comprend la fourniture d'un service de transposition WWW.

43. Procédé selon la revendication 37, dans lequel le message de signalisation est un message d'appel de demande de localisation, la fourniture d'un service HLR comprend l'exécution d'une consultation dans une base de données HLR située à l'intérieur du MSRN, et la formulation d'un message de réponse de demande de localisation contenant des informations d'abonné du service mobile extraites à partir de la base de données HLR.

44. Procédé selon la revendication 38, dans lequel le message de signalisation est un message d'appel de demande de localisation, la fourniture d'un service VLR comprend l'exécution d'une consultation dans une base de données VLR située à l'intérieur du MSRN, et la formulation d'un message de réponse de demande de localisation contenant des informations d'abonné du service mobile extraites à partir de la base de données VLR.

45. Procédé selon la revendication 39, dans lequel le message de signalisation est un message d'interrogation EIR, la fourniture d'un service EIR comprend l'exécution d'une consultation dans une base de données EIR située à l'intérieur du MSRN pour déterminer si un combiné mobile associé à l'interrogation EIR est frauduleusement utilisé, et la formulation d'un message de réponse EIR à l'interrogation EIR.

46. Procédé selon la revendication 40, dans lequel le message de signalisation est un message de demande d'authentification, et la fourniture d'un service AuC comprend les étapes consistant à:
(a) exécuter une consultation dans une base de données AuC basée sur le message de demande d'authentification ;
(b) fournir une réponse comprenant une clé de chiffrage publique à un combiné mobile ;
(c) recevoir une réponse en provenance du combiné mobile ; et
(d) octroyer l'accès du combiné mobile à un réseau de communication du service mobile en réponse à une valeur dans la réponse provenant du combiné mobile étant égale à une valeur attendue.

47. Procédé selon la revendication 41, dans lequel la fourniture d'un service de message court comprend l'envoi d'un message de service par message court à un abonné du service mobile en réponse au message de signalisation.

48. Procédé selon la revendication 42, dans lequel la fourniture d'un service de transposition WWW comprend l'exécution d'une consultation dans une base de données WWW située à l'intérieur du MSRN et l'extraction d'informations d'adresse WWW pour un abonné du service mobile sur la base d'informations contenues dans le message de signalisation.
